(19) Europäisches Patentamt
European Patent Office
Office européen des brevets

(11) **EP 4 109 844 B1**

(12) **EUROPEAN PATENT SPECIFICATION**

(45) Date of publication and mention
of the grant of the patent:
**23.04.2025  Bulletin 2025/17**

(21) Application number: **21305859.7**

(22) Date of filing: **23.06.2021**

(51) International Patent Classification (IPC):
**H04L 41/04** (2022.01)

(52) Cooperative Patent Classification (CPC):
**H04L 41/122; H04L 45/22**

(54) **A METHOD FOR USE IN ROUTING**

VERFAHREN ZUR VERWENDUNG IM ROUTING

PROCÉDÉ DESTINÉ À ÊTRE UTILISÉ DANS LE ROUTAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.12.2022  Bulletin 2022/52**

(73) Proprietors:
• **Mitsubishi Electric R&D Centre Europe B.V.
1119 NS  Schiphol Rijk Amsterdam (NL)**
Designated Contracting States:
**FR**
• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventor: **KHANFOUCI, Mourad
35708 Rennes Cedex 7 (FR)**

(74) Representative: **Plasseraud IP
104 Rue de Richelieu
CS92104
75080 Paris Cedex 02 (FR)**

(56) References cited:
**CN-A- 112 636 991      US-A1- 2018 077 023
US-A1- 2018 343 567**

**Description**

The present specification relates to the routing of a traffic between a User Equipment (UE) and a Point Of Presence (PoP) of a Virtual Network Function (VNF).

A similar method is for example disclosed in document US 2018/077023 A1.

Various technical specifications define the way in which network functions and services are deployed and managed by network operators and service providers worldwide. Virtual Network Functions (VNFs) are virtualized network services running on open computing platforms. Some of those network services could be formerly carried out by proprietary, dedicated hardware technology.

Examples of VNFs include virtualized routers, firewalls, wide area network (WAN) optimization, and network address translation (NAT) services. Most VNFs are run in virtual machines (VMs) on common virtualization infrastructure software such as VMWare or KVM.

VNFs can be linked together like building blocks in a process known as service chaining in order to build composite services. When it uses VNF technology, service chaining, and the application provisioning process, is simplified and shortened.

Respective technical specifications include, for example, the European Telecommunication Standards Institute's standard for Network Functions Virtualization (ETSI NFV).

Placement of virtual network functions (VNFs) is of importance for the performance optimization of the network. The VNF placement problem is to find the point of presence (PoP) of the network function in the open computing platforms of the network in order to fulfil the quality of service (QoS) requirements and the users' demands, for example, optimize, e.g. minimize, the latency of the access of the UEs to VNF, and/or optimize the throughput of the communication between the VNF and the UEs.

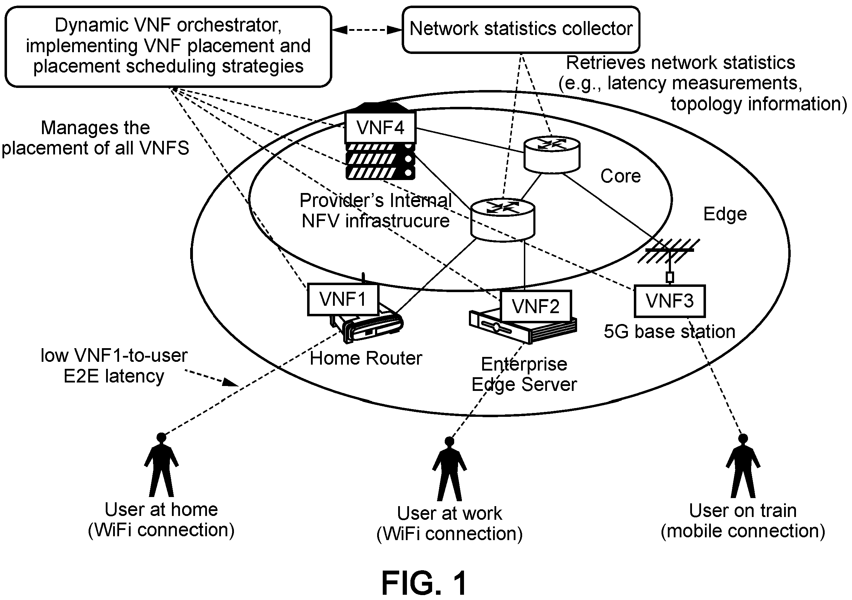

Fig. 1 presents an example, as in reference [1] the details of which are given in the end of the present specification, of an overall network formed for several access tiers (home network, enterprise network and some outdoor base stations network). This 5G network may be either an access network or an access network and a private core network forming a non-public network (NPN). The management part of the VNF includes two logical entities, which may be deployed in the core network, as a middleware between the core and access network, or in the access network.

The two management entities in Fig. 1, and as it can be used in other cases, are:

- A network statistics collector that collects various measurements from the network, i.e. latency measurements, topology information, UE locations, traffic parameters, or any data needed for the determinations of the VNF PoPs.
- A dynamic VNF orchestrator that retrieves the network data, including the data from the network statistics collector, and solves the network optimization problem to determine the position or point of presence (PoP) of the virtual network function(s) in the network that optimizes the QoS requirements and demands of the users of the network.

The network optimization problem that is solved by the VNF orchestrator can be, for example, an integer linear programming problem of minimizing the respective objective function [1], when the latency of the access to the VNF functions is optimized

For example, the equation and restraints below can be used for describing the VNF placement problem for multiple VNF functions:

$$Minimize_X \sum_{n_i} \sum_{P_k} \sum_{H_j} X_{i,j,k} l_{i,j,k}$$

*with*

$$\sum_{n_i} \sum_{P_k} X_{i,j,k} R_i \leq W_j; j = 1, \dots, M$$

$$\sum_{P_k} \sum_{H_j} X_{i,j,k} l_{i,j,k} \leq \theta_i; i = 1, \dots N$$

$$\sum_{H_j} X_{i,j,k} = 1; X_{i,j,k} \text{ binary for all paths } k$$

$$\sum_{H_j} X_{i,j,k} b_{i,j,k} < C_m \,, for \; all \; edges$$

That is, by solving the optimization problem, the placement binary variable $X_{i,j,k}$ is found of the network function $i$ that is located in the host $j$ *and* on the path $P_k$ from the UE k to the host $j$ *that* minimizes the objective function

$$Obj = \sum_{n_i} \sum_{P_k} \sum_{H_j} X_{i,j,k} l_{i,j,k}$$

The variable $l_{i,j,k}$ is the latency measured for the network function $i$ *that* is located in the host $j$ and on the path $P_k$ from the UE k to the host $j$.

The variable $R_i$ is the throughput needed for the network function $i$ and $W_j$ is the hardware capacity of the host $j$.

The variable $\theta_i$ is the maximum latency budget that is needed for the network function $i$.

The variable $b_{i,j,k}$ is the throughput required between the user and the vNF $i$ in case it is hosted at hj and using the path Pk and the variable $C_m$ is the capacity of the link.

Several techniques may be used by the orchestrator for solving the VNF placement problem among which are branch and bound techniques (as presented in reference [2]) that split the network into zones, test for each zone different positions for the virtual network functions, and find after testing the positions that minimize the objective function.

These techniques are often not scaling with the increase in the number of placed virtual functions and the growth of the network or depending on the changes in the topology of the network (i.e. the time needed to solve the optimisation problem grows exponentially with the number of functions and the size of the network).

One way to reduce the complexity at the orchestrator is to use betweenness centrality metric in order to determine the PoP of the virtual network function. In this case:

    1. The orchestrator determines paths in the network from the UE k positions towards different hosts j by taking into account the link capacities and the hardware capacity of the hosts;

    2. The orchestrator places the VNFs in hosts that are the most central in the topology, i.e. nodes with the maximum betweenness centrality.

This technique is less complex than solving the integer linear programming problem if the centrality metric is calculated by the Brandes' recursive algorithm [3].

## Problem to be addressed

Once the placement of the PoP of the VNF is performed, placing it at a different node in the network, i.e. relocating the VNF, may be needed depending on the changes in the UE distribution, traffic requests and function calls. However, such a move involves certain costs.

For example, for the centrality-based VNF placement, the centrality of the PoP of the VNF may change with the change of the UE distribution in the deployment when the network is reconfigured so that certain access points and routers are activated to serve the updated distribution, and when previously active access points and routers become inactive for the traffic associated with the VNF. So, a significant change may be found in the centrality metric and thus the VNF may be re-allocated, with a consequence of the increase of the deployment cost of the VNF (this additional cost may be, for example, in the form of an additional delay for the UE to access to the new PoP of the VNF that is due to application context transfer between the old PoP and the new PoP). In other words, the sensitivity of the centrality metric to the change of the traffic distribution may cause relocation of the VNF during the UEs mobility. This may cause an increase in the deployment complexity since the centrality should be recalculated, new PoP determined, and VNF relocated to guarantee the low latency constraints in the new PoP.

## Summary

The present specification aims to improve the situation.

To this end, it is aimed at a method for use in routing of a traffic between at least one user equipment, UE, and a point of presence, PoP, of a Virtual Network Function, VNF, placed in a network comprising a Multi-Access Edge Computing infrastructure comprising a plurality of routers, at least some of which are linked and where at least one link links the plurality of routers with the PoP, the method comprising:

a) obtaining an indication of which of at least two possible paths for the traffic between the at least one UE to the PoP and passing via a router in the plurality of routers corresponds to a smaller estimate of an impact on a centrality of the PoP,

b) thereby enabling selection of the respective path for routing of the traffic between the at least one UE and the VNF

The above method can be implemented, for example, by a router, or a MEC server, or even a user equipment (UE) when such a UE acts as a router in a network.

Thus, the above situation is addressed by introducing traffic steering techniques between the nodes of the network that limit the impact of the traffic change on the centrality of the VNF PoP and thus reduce the probability of VNF relocation. In other words, traffic steering techniques are used to mitigate the effect of the dynamic traffic and UE distribution effect on the virtual network function placement metric. An impact of the traffic change on the centrality of the VNF PoP can be subject to limiting for a given node. A negative impact on the centrality of the given node can be subject to limiting for this node and a positive impact on the centrality of other nodes can be subject also to limiting for this node.

These techniques are to reduce the probability of PoP of the VNF relocation in time and improve the resistance of centrality-based VNF placement with respect to dynamic traffic and UE distribution change.

Further, the present specification is aimed at the method as specified above, wherein the centrality may be based on at least one of:

- betweenness centrality,
- closeness centrality,
- graph centrality, and
- stress centrality.

Alternatively or additionally, in the method as specified above, the smaller estimate of the impact on the centrality may be based on at least one of:

- a past topology,
- a current topology and
- an expected topology of the network,

wherein the topology is configured to vary due to at least one of: a handover of a UE from one access point to another access point; switching off of a router in the plurality of routers; and switching on of a router in the plurality of routers.

Further, in any of the specified above variations of the method, the network may further comprise a dynamic VNF orchestrator that may dynamically change a placement of the PoP in the network, and the method may comprise:

- obtaining a signal initiating a next change of the placement of the PoP with a delay which is based on the selection of the path with the smaller estimate of the impact on the centrality of the PoP,
- thereby enabling transmission information necessary to run VNF from the previous PoP to the new PoP.

In the method above, in case of the network further comprising a network statistics collector adapted to prepare network statistics, in which the dynamic VNF orchestrator is configured to retrieve the network statistics,

- the delay may further be based on the network statistics taking into account the traffic between the at least one UE and the VNF as routed along the selected path.

In any of the specified above variations of the method, said obtaining the indication may comprise generating the indication by comparing the estimates of the impacts on the centrality of the PoP.

The method further may comprise, for obtaining said indication in a), at least one of:

- obtaining indications of centralities of those of the plurality of routers which lie on at least one of at least two possible paths for the traffic between the at least one UE to the PoP; and
- receiving as an input, indications of accumulated dependencies of those of the plurality of routers which lie on at least one of at least two possible paths for the traffic between the at least one UE to the PoP.

In any of the specified above variations of the method, said obtaining the indication in a) may be performed at a node of the network different from the router, preferably at a Mobile Edge Computing, MEC, server.

The above method may further comprise, after b), a transmission to the at least one router of the selected path, a signal for updating its routing scheme in accordance with the selection.

In any of the specified above variations of the method, said obtaining in a) may comprise receiving the indication at an input of the router, preferably in a form of a signal updating a routing scheme at the router to use the selected path.

In any of the specified above variations of the method the centrality may be based on the betweenness centrality, and each of estimates of the impact on the centrality of the PoP due to selecting one of the at least two possible paths is calculated as a weighted sum of changes of accumulated dependencies of routers on the path.

Above, the changes may comprise at least one of (a) a change which has occurred after preceding estimation and (b) an expected change.

In any of the specified above variations of the method each of estimates of the impact on the centrality of the PoP due to selecting one of the at least two possible paths may be calculated by an iterative method using a Brandes algorithm.

In any of the specified above variations of the method the plurality of routers may include a set of intermediary routers comprising routers which are estimated to contribute more than a threshold to the centrality of the VNF PoP, and the smaller estimate of the impact on the centrality of the PoP may be based on estimates of the changes in accumulated dependencies of at least some routers among said intermediary routers.

Furthermore, the present specification is aimed at methods, UEs, routers, dynamic VNF orchestrators, network statistics collectors, and signals, as presented in the description and figures, and configured to perform the subject matter of the present specification.

For example, the present invention aims also at a computer program comprising instructions which, when the program is executed by a processing circuit, cause the processing circuit to carry out the method as defined above. The invention aims also at a non-transitory computer storage medium, storing instructions of such a computer program.

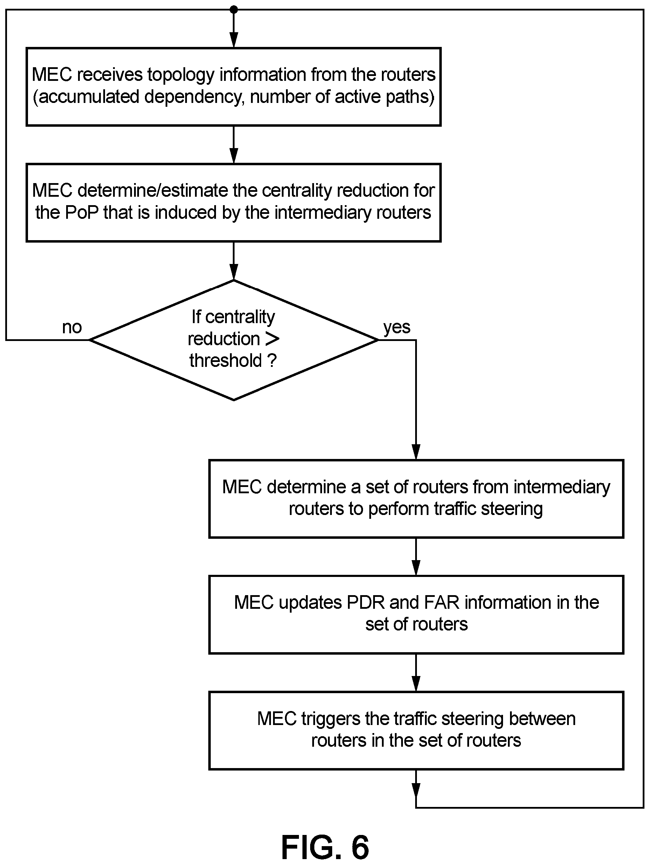

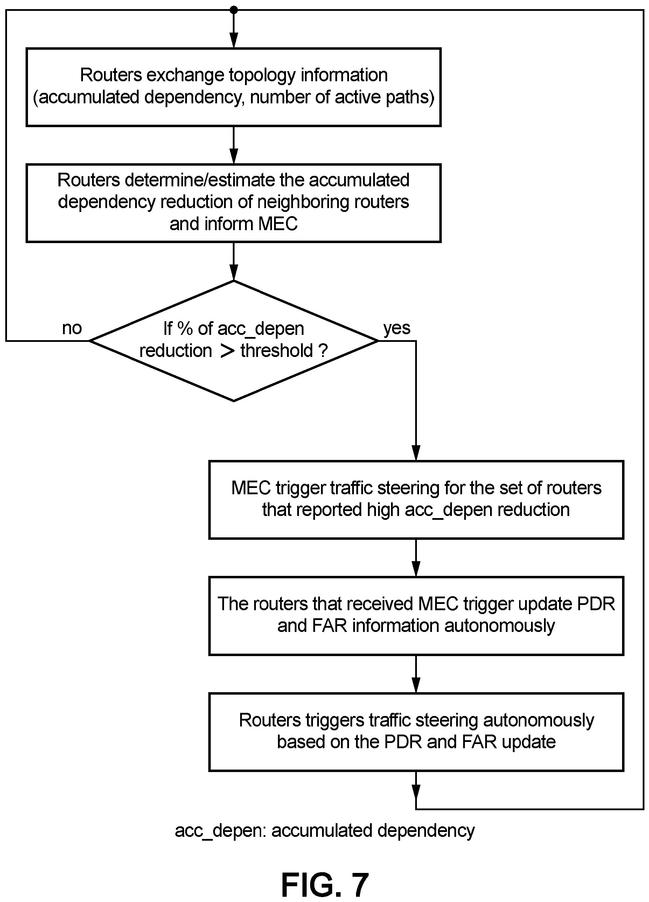

Figures 6 and 7 are typical flowcharts that can illustrate a general algorithm of such a program which can be executed by a MEC server and/or by a router.

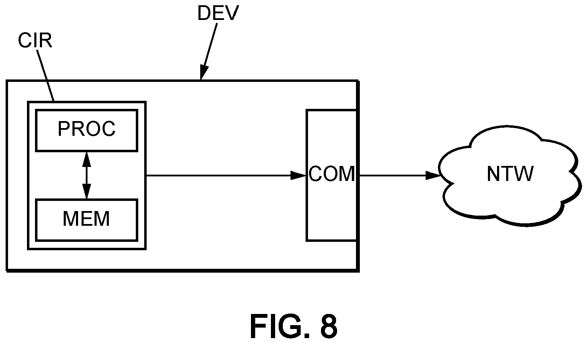

For another example, the present invention aims also at a device comprising a processing circuit (PROC, MEM as presented in the example of figure 8), configured to implement the method as defined above. A shown furthermore in figure 8, the device can comprise also a communication interface (COM) configured to be connected to the network.

That device can be, as explained in the specification below, for example, a router, or a MEC server, or even a user equipment (UE) when such a UE acts as a router in a network.

More details and advantages of possible embodiments of the invention will be presented below with reference to the appended drawings, where:

Fig. 1 shows an example network comprising an example of Multi-Access Edge Computing infrastructure;

Fig. 2 schematically shows an example of the network in which the VNF PoP has to lie on a path between an Internet Gateway and any UE, and the placements of the VNF PoP and the Internet Gateway are subject to selection;

Fig. 3 shows an example of a network in which traffic steering between multiple routers can be used for maintaining the placement of the PoP of the VNF;

Fig. 4 schematically shows an example of the network in which the placement of the PoP of the VNF may be maintained longer at the same position using the method disclosed in the specification;

Fig. 5 shows an example of routing enabled by the method according to an embodiment in the example network of Fig. 4;

Fig. 6 shows a flowchart of an example of the method with steps according to a more centralized embodiment;

Fig. 7 shows a flowchart of an example of the method with steps according to a more distributed embodiment.

Fig. 8 illustrates schematically a device according to an embodiment of the invention.

Virtual network function (VNF) placement is an important component of modern orchestration systems and one relatively simple technique is to use centrality metric to find the VNF placement, i.e. the point of presence (PoP) in the network. This centrality-based placement is based on the contribution of the routers to the paths followed by the packets of the active user terminals, i.e. *"data paths"*, between the PoP of the VNF and the UEs. In the case of dynamically changing traffic and/or UE distribution, the centrality of the nodes, including the PoP of the VNF, may change drastically. Thus, the VNF is at times relocated, which is a costly process that will increase the overall latency of the communication between the user terminals and the PoP of the VNF. The VNF relocation may also generate drop in the quality of service offered to the UEs since the communication is first dropped with the old VNF PoP before it is re-established with the new VNF PoP.

In this disclosure, the centrality can be based on at least on of (a) betweenness centrality, (b) closeness centrality, (c) graph centrality, and (d) stress centrality.

The above centralities can be calculated using, for example, respective Brandes' iterative algorithms [3].

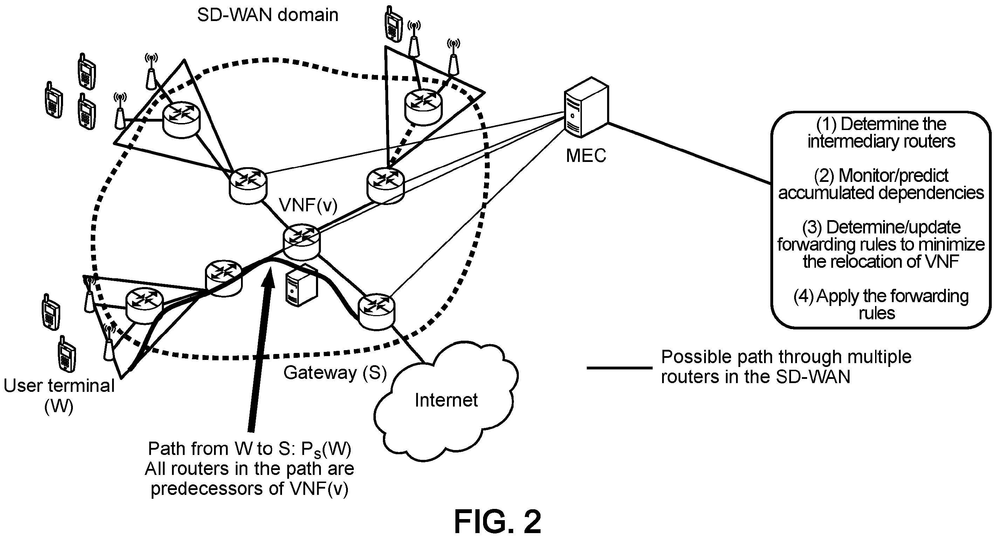

For example, in the example of Fig. 2 (where triangles can be sub-networks of the software defined WAN (SD-WAN), the Brandes' iteration for calculating the betweenness centrality of a node $v$, which is considered as candidate for the placement of the VNF PoP, is given by the following relation ([3]):

$$C_B(v) = \sum_{s \neq v} \delta_s(v) = \sum_{s \neq v} \sum_{w:v \in P_s(w)} \frac{\sigma_{s,v}}{\sigma_{s,w}} \left(1 + \delta_s(w)\right)$$

The variable $\sigma_{s,v}$ is the number of the shortest paths between the nodes $s$ and $v$ of the network, where each node $s$ is a candidate for placement of an internet gateway in this example. Nodes $w$ correspond to UEs. The variable $\sigma_{s,w}$ is the number of those paths between the nodes $s$ and $w$, which are shortest paths among those paths which pass via node $v$ (in other words, where node $v$ is a predecessor of node $w$ on a shortest path $P_s(w)$ coming to the node $w$ from the node $s$).

The variable $\delta_s(w)$ is known as an accumulated dependency of the node $s$ on the node $w$. The accumulated dependency describes the contribution of the paths from node $w$ to paths reaching the node $s$.

The placement of VNF PoP is selected to maximize the centrality function.

Similarly, for example, for the case of VNF performing a function associated with a connection with the VNF traffic between two UEs (e.g. a proxy connection), rather than the connection between an UE and Internet Gateway, the preferred placement of the PoP of the VNF can be such, if possible, that it lies on a majority of the shortest paths between any two UEs in the deployment.

When the UE distribution and/or the UE traffic is changing in the deployment region, the centrality of the VNF will evolve approximately as follows:

$$\partial\big(C_B(v)\big) = \sum_{s \neq v} \sum_{w:v \in P_s(w)} \left( \frac{(\sigma_{s,w}\partial\sigma_{s,v} - \sigma_{s,v}\partial\sigma_{s,w})}{\sigma_{s,w}^2} \left(1 + \delta_s(w)\right) + \frac{\sigma_{s,v}}{\sigma_{s,w}} \partial\delta_s(w) \right)$$

In the above expression for the change in the betweenness centrality $\partial(C_B(v))$, $\partial\sigma_{s,v}$ is the change in the number of paths between the node s and the PoP of the VNF, $\partial\sigma_{s,w}$ is the change in the number of paths between the node s and the UE $w$ that is introduced by the change in UE traffic distribution, and the variable $\partial\delta_s(w)$ is the change in the accumulated dependency of the node s over the node w (UE).

The invented method aims to limit the change in the betweenness centrality, or a different centrality metric which was used for placing the VNF PoP, to reduce the probability of a move of the PoP.

To this end, a router, an orchestrator, an UE and/or another node can employ a method for use in routing of a traffic between at least one user equipment, UE, and a point of presence, PoP, of a Virtual Network Function, VNF, placed in a network comprising a Multi-Access Edge Computing infrastructure comprising a plurality of routers, at least some of which are linked and where at least one link links the plurality of routers with the PoP, the method comprising:

- obtaining an indication of which of at least two possible paths for the traffic between the at least one UE to the PoP and passing via a router in the plurality of routers corresponds to a smaller estimate of an impact on a centrality of the PoP of the VNF (e.g. a smaller estimate of a reduction of centrality of the VNF or a small increase of the centrality of the nodes other than the PoP of the VNF),

- thereby enabling selection of the respective path for routing of the traffic between the at least one UE and the VNF.

A "small impact" or "small estimate of impact" on centrality are meant here as a:

- Small reduction of the centrality of the PoP, or

- Small increase of the centrality of the other nodes (other than the PoP),

the PoP being the node with the maximum betweenness centrality.

The Multi-Access Edge Computing infrastructure can in part or in full accord to the specification in ETSI GS MEC 003 V2.1.1 (2019-01), "Multi-access Edge Computing (MEC); Framework and Reference Architecture".

When such a method is employed, the impact of the traffic and UE position change on the topology of the network between the VNF PoP and the nodes s (which can be routers capable of hosting the internet gateway function and at the same time, if needed, intermediary routers for the traffic which passed from the gateway to the VNF PoP and follows to UEs), and consequently the associated change in centrality, provides a small contribution to the overall change of the centrality of the PoP of the VNF. The impact of the change of the position/traffic distribution of the UEs on the VNF centrality is determined essentially by the variation in the accumulated dependencies of the nodes s on the nodes w (UEs).

That is, for the case of the betweenness centrality, the above method will reduce the probability of a move (relocation) of the PoP since the change will become approximately

$$\partial\big(C_B(v)\big) \approx \sum_{s\neq v}\ \sum_{w:v\epsilon P_s(w)} \left(\frac{\sigma_{s,v}}{\sigma_{s,w}}\partial\delta_s(w)\right),$$

and this sum will be enabled to be limited by the traffic steering favouring the route (respectively activating intermediary routers) with a smaller estimate of an impact on the betweenness centrality of the PoP.

The possibility to choose between two possible paths can be provided in ultra-dense networks, for example, in 5G networks with at least 5 portable routers per 100 m$^2$. For example, for 5G, a network may be ultra-dense in the sense as provided in CHEN, Shanzhi, QIN, Fei, HU, Bo, et al. User-centric ultra-dense networks for 5G: Challenges, methodologies, and directions. IEEE Wireless Communications, 2016, vol. 23, no 2, p. 78-85.

The traffic can be, for example, Layer 3 or above traffic. Also, it can be the application level traffic, or IP traffic, or ethernet traffic.

In other words, the specification discloses a technique for limiting, in the network in which one path from at least two paths can be selected to be established from an intermediary router to the PoP, the contribution of the accumulated dependency changes to the centrality of the PoP. This limiting can be implemented by steering the traffic from an intermediary router with a greater contribution in the accumulated dependency towards an intermediary router with a lower contribution in the accumulated dependency. In other words, the specification discloses a technique which steers the traffic between the routers towards the vNF PoP so that the accumulated dependency is more balanced along the data-path.

The expression "more balanced" can mean that the difference between the change of two values of the accumulated dependency in time is below a threshold in absolute value.

Example:

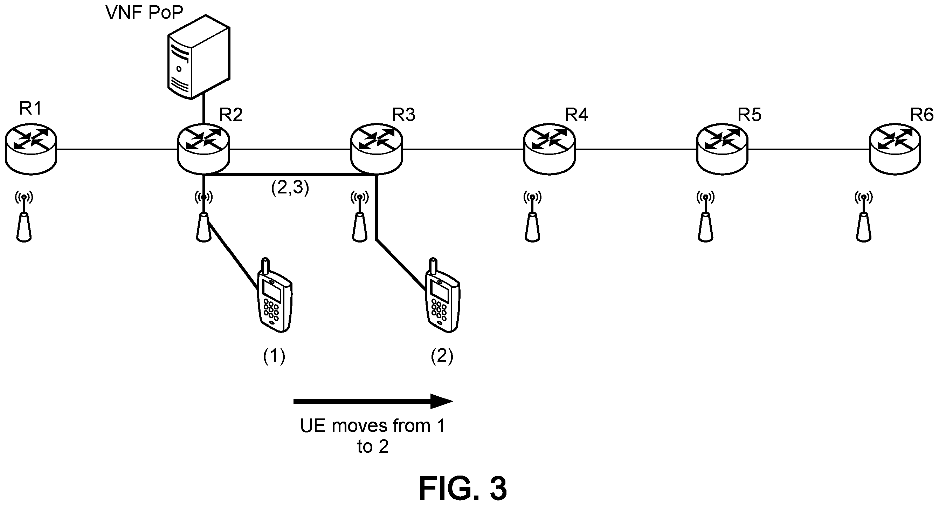

The use of the traffic steering for maintaining the PoP of the VNF can be exemplified on routers in a line deployment, with one UE present in the deployment, as shown in Fig. 3.

There, six routers R1-R6 are in the line. It is supposed that initially there is a single active path from the UE towards the router R2 where the VNF PoP is located. In this position, the accumulated dependency at the router R2 is 1. This accumulated dependency is higher than the accumulated dependencies at the routers R3 and R1, since they equal 0, because none of the application packets of the UE is forwarded to the router R1 or R3.

When the UE moves from the position (1), at which it accesses the network via the router R2, to position (2), at which it accesses the network via the router R3, and if there was no traffic steering at the router R3, the PoP of the VNF would have to be re-allocated from the router R2 to the router R3. The accumulated dependency at R3 would increase to 1 and the accumulated dependency at R2 would be reduced to 0.

The relocation of the VNF PoP can however be prevented by activating a path forwarding the packets between the routers R2 and R3 in order to maintain the centrality of the VNF PoP.

Additionally, the traffic can be steered between the routers in such a way that adding the new active path between routers R2 and R3 will be performed while maintaining a sufficient QoS. In particular, packets of the UE-VNF traffic can be forwarded in advance to the router R3 so that at a given time there will be the same accumulated dependency in the router R2 and R3. That is, a new path between R2 and R3 will be added for the packets of the UE.

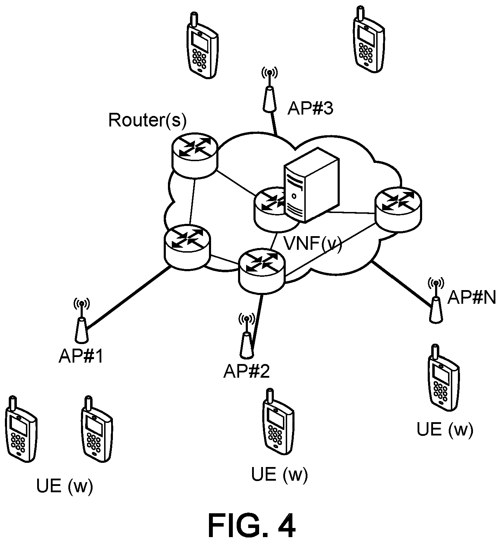

The path (2, 3) is determined such as the path that will balance accumulated dependencies of the routers R2 and R3. In particular, in the example of Fig. 4, activating this path for the packets of the traffic between the VNF and the UE makes the accumulated dependency of R3 equal to the accumulated dependency of R2. The packets are forwarded to the new router R3 and when the UE is moved to R3, this router will forward the packets to the VNF PoP and the UE without relocation of the VNF PoP.

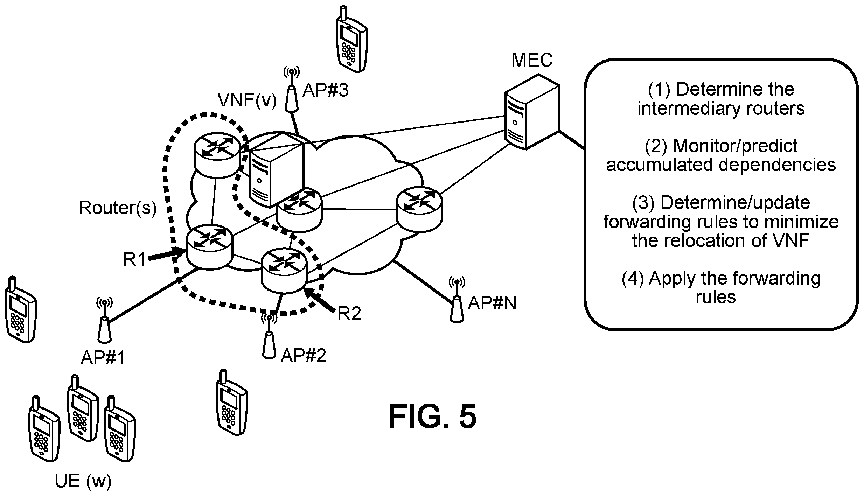

In similarity with the previous Example, the specification proposes Embodiments based on a routing scheme that, for example, can balance (or more balance) the accumulated dependencies of the intermediary routers of the UEs, when these intermediary routers may be present on the active data path from the UE to the VNF PoP. In these embodiments however, the routing scheme is performed in a network with a topology, e.g. as in Fig. 4 and 5, i.e. not with linear routers deployment as in Fig 3. In this network topology there exists a choice which of at least two possible paths to activate for the traffic between the at least one UE to the PoP and passing via a router in the plurality of routers. According to the specification, the selected path is to correspond to a smaller estimate of an impact on a centrality of the PoP.

For example, according to this specification, the routing scheme can be employed as illustrated in Fig. 5, in the network shown Fig. 4. When a UE moves from the access point AP#1 to the access point AP#2, selecting a path from a router R2 to the PoP of the VNF is performed based on comparison of estimates of the impact on the centrality of the VNF. For example, in Fig. 5, the path including a segment directly connecting routers R2 and R1 leads to the smallest estimate of the impact, and is indicated as selected.

The router, at which the path limiting an estimate of the impact on the centrality of the VNF is taken, can be a logical router that is equipped with packet detection rule (PDR), i.e. a table that allows the identification of other nodes (including routers) transmitting the packets to the given router, and a forwarding action rule (FAR) that identifies to which neighboring nodes (including routers) the given router is transmitting packets. This logical router can be located for example, in the user terminal, or the base station, or in an intermediate router in the network.

The example of Fig. 5 is at the same time an example where the network includes a dynamic VNF orchestrator that dynamically changes a placement of the PoP in the network. This orchestrator is located at a Mobile Edge Computing, MEC, server.

In this example, the orchestrator obtains, by generation, an indication of which of at least two possible paths for the traffic between the at least one UE to the PoP and passing via a router in the plurality of routers corresponds to a smaller estimate of an impact on a centrality of the PoP.

At the same time, the router R2 also obtains such an indication, from the orchestrator, via the network.

Any other router may as well receive such an indication, regarding the router R2 or other routers which are to be employed for communicating the UE-VNF traffic in case of the UE handover.

Still, the VNF may need to be relocated after some changes in the UE distribution. According to the present specification, it is possible to perform such a relocation with a delay which is based on the selection of the path with the smaller estimate of the impact on the centrality of the PoP.

Accordingly, the orchestrator may obtain, by generation, a signal initiating a next change of the placement of the PoP.

Also, each of the routers may obtain, by receiving from the orchestrator, the signal initiating the next change of the placement of the PoP.

A method performed with the use of the orchestrator at the MEC may include the following steps:

(1) Multi-access edge computing (MEC) control node receives information from every router $v$ sufficient to determine the accumulated dependency $\delta_s(v)$ towards every other node s and to calculate the betweenness centrality for the nodes;

(2) The orchestrator at the MEC node retrieves this information and setups the VNF PoP at the node with the maximum betweenness centrality;

(3) The orchestrator at the MEC node determines the intermediary routers as routers that are close to the UEs,

- wherein "close" means with high closeness centrality with respect to the UE nodes, i.e. with closeness centrality being above a threshold; or
- wherein "close" means the routers that are receiving packets from UEs located in the same geographical region, i.e, where the distance between the UEs and the base station is below a threshold, for example around 250 meters for ultra-dense environment (the threshold is dependent on the specific deployment);

(4) From the determined intermediary routers, the orchestrator at the MEC node determines the nodes with the highest change in accumulated dependency when the UEs are moving in the region;

(5) The orchestrator at the MEC node updates the packet detection rules (PDR) and the forwarding action rules (FAR) that are located (i.e. recorded) in the intermediary routers, as the following:

- Each router identifies neighboring intermediary routers with high change (in time) in the accumulated dependency; where "high change" means exceeding a threshold (for example, a change of the PDR/PTDR may occur if the set of the neighboring intermediary routers change in time);
- Each router forwards packets to identified neighboring routers with the high change so that the change in the accumulated dependency can be reduced.

(6) Go to step 2 (but with updated PDRs and FARs).

The forwarding action rules, FAR, can in other respects satisfy the existing Technical Standard TS 23.501 specifying the rules for forwarding the packets between routers.

The packet detection rules, PDR, can in other respects satisfy the existing TS 23.501, specifying the rules for the detection of the packets from a given router.

Further, in the more centralized embodiments, i.e. embodiments employing the orchestrator for more steps, the technique explained above can be performed together with one or more steps indicated in Fig. 6. For example, steps (2) to (5) above can be performed with the method of Fig. 6, showing a periodic loop that consciously updates the PDRs and FARs in order to maintain the centrality of the PoP of VNF (while this Is not indicated in Fig. 6, next cycle in the loop (2-> 3->4->5-> 2), in a normal way, is not to be performed if, for example, the numbers of cycles reaches a maximum number, or if the network decides to relocate the VNF).

However, in general, implementing the steering does not require the orchestrator for all of the steps. Accordingly, the present specification encompasses also more decentralised embodiments.

For example, a method may include the following steps:

(1) The centrality of the VNF is calculated through the propagation of accumulated dependencies in the network; that is, a router transmits in a direction towards the VNF its accumulated dependency and the accumulated dependencies of the preceding routers on the paths from the UEs towards the VNF; and the centrality is calculated at the VNF.

   (a) The router at each node $w$ transmits its accumulated dependencies towards all those nodes in the network, which are to be considered for activation when the UEs move; also the router at each node $w$ stores a local copy of the transmitted and received accumulated dependencies;

(2) The nodes $w$ calculate their betweenness centralities based on Brandes' iterative algorithm;

(3) The nodes cooperate to enable determination of the intermediary routers such as the routers that are close to the UEs,

   (a) wherein "close" means with a high closeness centrality with respect to the UE nodes, i.e. with closeness centrality being above a threshold; and/or
   (b) wherein "close" means the routers that are receiving packets from UE located in the same geographical region, i.e, where the distance is below a threshold; and/or
   (c) wherein "close" can be defined by or with a condition that for a router accumulated dependency acc_d is above a threshold A, i.e. acc_d>A, is used to determine if a router is located "close" to the VNF PoP (the threshold "A may be set, for example, to 1; the MEC server or the network may set the threshold); and
   (d) wherein the intermediate routers may be defined with an additional condition that for a router accumulated dependency acc_d is below a threshold B, i.e. acc_d<B, is used (where the threshold B may be set to the acc_d of the VNF PoP); and/or
   (e) wherein the nodes can cooperate by exchanging their accumulated dependencies in the way useful for their calculation, and respectively transmitting lists of their neighbors determined to be intermediate routers;

(4) From the determined intermediary routers, each node w determines the nodes with the highest change in accumulated dependency when the UEs are moving in the region;

(5) Each intermediary router w updates its packet detection rules (PDR) and the forwarding action rules (FAR) as the following:

   - Each router identifies neighboring routers with high change in accumulated dependency;
   - Each router forward packets to identified neighboring router such that the change in accumulated dependency is reduced.

(6) Go to step 2 (with updated PDRs and FARs).

Further, in the more distributed embodiments (in the semi-centralized embodiments), i.e. embodiments employing the orchestrator for less steps than in the more centralized embodiments, the technique explained above can be performed together with one or more steps indicated in Fig. 7. Overall, in the method of Fig. 7, routers on possible paths calculate or estimate their own accumulated dependencies for the centrality of VNF PoP, exchange signals with information on these accumulated dependencies, to convey the information on accumulated dependencies to the MEC. The MEC sends signals to update the PDR filters at the nodes, for triggering the communication according to the selected path from some router if, based on the received estimates of the accumulated dependencies, an impact on the centrality of the VNF PoP is estimated to be above a threshold. For example, the accumulated dependency reduction at this router can be estimated as larger than a given threshold. For example, this threshold may be set for a relative accumulated dependency reduction. It may be not necessary for all routers on possible paths between the UEs and the VNF PoP to calculate their accumulated dependency and/or exchange information on it with their neighbouring routers (also being on the possible paths): these operations may be performed only for intermediate routers, which can be defined as routers whose accumulated dependencies are higher than a threshold.

Hence, the methods disclosed in the present specification, enabling the traffic steering for limiting the probability of the VNF relocation, can be especially efficiently performed by optionally determining a set of intermediary routers that are contributing more than a threshold to the centrality of the VNF PoP. To the end, the set of intermediary routers may be determined as the routers with low closeness or betweenness centrality (i.e. it being less than a threshold) in the network and that are used to forward the traffic to the VNF PoP. Alternatively, the set of intermediary routers may be determined as the routers with low betweenness centrality and that are close to the UE current location (where "close" means with a distance less than a threshold).

The accumulated dependencies can be then calculated for this set of intermediary routers between the UEs and the PoP of the VNF. For example, the calculation can be periodic. Also, changes in the accumulated dependencies can be calculated for the intermediate routers.

Traffic steering is performed such that the packets are routed in order balance the accumulated dependencies change between the routers. The traffic of UE(w) is forwarded from router with high increase in the accumulated dependency towards routers with low accumulated dependency.

The techniques disclosed in the specification allow to focus on monitoring of the accumulated dependencies of a subset of nodes, for estimating the possible impacts on the centrality of the VNF and limiting the probability of the VNF relocation by selecting a path with a more limited impact, instead of the recalculation of the centrality of the VNF. Consequently, the complexity also can be reduced, with respect to the full recalculation of the centrality. Therefore, the disclosed techniques can be scaling better than previously used, thanks to the possibility of the distributed and local traffic steering based on estimates or predictions of the accumulated dependencies.

Moreover, the techniques disclosed in the specification may be used with an artificial intelligence designed to provide predictions of the accumulated dependencies which may be used for advance update of the traffic steering rules in the selected intermediary routers when one or more UE is expected to move while being served by the VNF.

For example, as shown on figure 8, a device DEV (such as a router or a MEC server) can comprise a processing circuit CIR including a processor PROC and a memory MEM storing at least instructions data of a computer program according to the present invention. The processor PROC can access to the memory MEM so as to read and execute the instructions stored in the memory. Moreover, the device DEV further includes at least a communication interface COM with the network NTW.

**References:**

1. Cziva, Richard, Christos Anagnostopoulos, and Dimitrios P. Pezaros. "Dynamic, latency-optimal vNF placement at the network edge." Ieee infocom 2018-ieee conference on computer communications. IEEE, 2018.
2. BARTOK, Dávid et MANN, Zoltán Ádám. A branch-and-bound approach to virtual machine placement. In : Proceedings of the 3rd HPI cloud symposium "operating the cloud. 2015. p. 49-63.
3. BRANDES, Ulrik. A faster algorithm for betweenness centrality. Journal of mathematical sociology, 2001, vol. 25, no 2, p. 163-177.

**Claims**

1. A method for use in routing of a traffic between at least one user equipment, UE, and a point of presence, PoP, of a Virtual Network Function, VNF, placed in a network comprising a Multi-Access Edge Computing infrastructure comprising a plurality of routers, at least some of which are linked and where at least one link links the plurality of routers with the PoP, the method comprising:

   a) obtaining an indication of which of at least two possible paths for the traffic between the at least one UE to the PoP and passing via a router in the plurality of routers corresponds to a smaller estimate of an impact on a centrality of the PoP,
   b) thereby enabling selection of the respective path for routing of the traffic between the at least one UE and the VNF.

2. The method of claim 1, wherein the centrality is based on at least one of:

   - betweenness centrality,
   - closeness centrality,
   - graph centrality, and
   - stress centrality.

3. The method of any of preceding claims, wherein the smaller estimate of the impact on the centrality is based on at least one of:

   - a past topology,
   - a current topology and
   - an expected topology of the network,

   wherein the topology is configured to vary due to at least one of: a handover of a UE from one access point to another access point; switching off of a router in the plurality of routers; and switching on of a router in the plurality of routers.

4. The method of any of preceding claims, the network further comprising a dynamic VNF orchestrator that may dynamically change a placement of the PoP in the network, the method comprising:

   - obtaining a signal initiating a next change of the placement of the PoP with a delay which is based on the selection of the path with the smaller estimate of the impact on the centrality of the PoP,
   - thereby enabling transmission information necessary to run VNF from the previous PoP to the new PoP.

5. The method of claim 4, for the network further comprising a network statistics collector adapted to prepare network statistics, in which the dynamic VNF orchestrator is configured to retrieve the network statistics, wherein

   - the delay is further based on the network statistics taking into account the traffic between the at least one UE and the VNF as routed along the selected path.

6. The method according to anyone of the preceding claims, wherein said obtaining the indication comprises generating the indication by comparing the estimates of the impacts on the centrality of the PoP.

7. The method of claim 6, comprising, for obtaining said indication in a), at least one of:

   - obtaining indications of centralities of those of the plurality of routers which lie on at least one of at least two possible paths for the traffic between the at least one UE to the PoP; and
   - receiving as an input, indications of accumulated dependencies of those of the plurality of routers which lie on at least one of at least two possible paths for the traffic between the at least one UE to the PoP.

8. The method according to any one of the preceding claims, wherein said obtaining the indication in a) is performed at a node of the network different from the router, preferably at a Mobile Edge Computing, MEC, server.

9. The method according according to claim 1, further comprising, after b), a transmission to the at least one router of the selected path, a signal for updating its routing scheme in accordance with the selection.

10. The method according to any one of the preceding claims, wherein said obtaining in a) comprises receiving the indication at an input of the router, preferably in a form of a signal updating a routing scheme at the router to use the selected path.

11. The method according to any one of preceding claims, wherein the centrality is based on the betweenness centrality, and each of estimates of the impact on the centrality of the PoP due to selecting one of the at least two possible paths is calculated as a weighted sum of changes of accumulated dependencies of routers on the path.

12. The method according to any one of preceding claims, wherein each of estimates of the impact on the centrality of the PoP due to selecting one of the at least two possible paths is calculated by an iterative method using a Brandes algorithm.

13. The method according to any one of preceding claims, wherein the plurality of routers include a set of intermediary routers comprising routers which are estimated to contribute more than a threshold to the centrality of the VNF PoP, and the smaller estimate of the impact on the centrality of the PoP is based on estimates of the changes in accumulated dependencies of at least some routers among said intermediary routers.

14. A device comprising a processing circuit for performing the method according to any one of the precedent claims.

15. A computer program comprising instructions which, when the program is executed by a processing circuit, cause the processing circuit to carry out the method of any one of the claims 1 to 13.

**Patentansprüche**

1. Verfahren zum Verwenden in einem Routing eines Verkehrs zwischen wenigstens einer Benutzerausrüstung, UE, und einem Point of Presence, PoP, einer virtuellen Netzwerkfunktion, VNF, welche in einem Netzwerk platziert ist, welches eine Multi-Access Edge Computing Infrastruktur umfasst, welche eine Mehrzahl von Routern umfasst, von welchen wenigstens manche verknüpft sind und wobei wenigstens eine Verknüpfung die Mehrzahl von Routern mit dem PoP verknüpft, wobei das Verfahren umfasst:

   a) Erhalten einer Indikation darüber, welcher von wenigstens zwei möglichen Wegen für den Verkehr zwischen dem wenigstens einen UE zu dem PoP und über einen Router in der Mehrzahl von Routern verlaufend einer kleineren Schätzung einer Auswirkung an einer Zentralität der PoP entspricht,
   b) dadurch Ermöglichen einer Auswahl des entsprechenden Weges für ein Routen des Verkehrs zwischen der wenigstens einen UE und dem VNF.

2. Verfahren nach Anspruch 1, wobei die Zentralität wenigstens auf einem aus den Folgenden basiert:

   - einer Betweenness-Zentralität,
   - einer Nähezentralität,
   - Graphenzentralität, und
   - Stresszentralität.

3. Verfahren nach einem der vorhergehenden Ansprüche, wobei die kleinere Schätzung der Auswirkung auf die Zentralität auf wenigstens einem aus den Folgenden basiert:

   - einer vergangenen Topologie,
   - einer derzeitigen Topologie, und
   - einer erwarteten Topologie des Netzwerks,

   wobei die Topologie dazu eingerichtet ist, aufgrund von wenigstens einem aus den Folgenden zu variieren: einer Übergabe eines UE von einem Zugangspunkt zu einem anderen Zugangspunkt; einem Ausschalten eines Routers in der Mehrzahl von Routern; und einem Einschalten eines Routers in der Mehrzahl von Routern.

4. Verfahren nach einem der vorhergehenden Ansprüche, wobei das Netzwerk ferner einen dynamischen VNF-Orchestrator umfasst, welcher eine Platzierung des PoP in dem Netzwerk dynamisch ändern kann, wobei das Verfahren umfasst:

   - Erhalten eines Signals, welches eine nächste Änderung der Platzierung des PoP mit einer Verzögerung initiiert, welche auf der Auswahl des Weges mit der kleineren Schätzung der Auswirkung auf die Zentralität des PoP basiert,
   - dadurch Ermöglichen einer Übertragung von Informationen, welche notwendig sind, eine VNF von dem vorherigen PoP auf den neuen PoP abzuspielen.

5. Verfahren nach Anspruch 4, wobei das Netzwerk ferner einen Netzwerk-Statistik-Kollektor umfasst, welcher dazu eingerichtet ist, Netzwerkstatistiken vorzubereiten, in welchen der dynamische VNF-Orchestrator dazu eingerichtet ist, die Netzwerkstatistiken abzurufen, wobei

   - die Verzögerung ferner auf den Netzwerkstatistiken basiert, welche den Verkehr zwischen der wenigstens einen UE und der VNF in Betracht ziehen, als entlang des ausgewählten Weges geroutet.

6. Verfahren nach einem der vorhergehenden Ansprüche, wobei das Erhalten der Indikation ein Erzeugen der Indikation durch ein Vergleichen der Schätzungen der Auswirkungen auf die Zentralität des PoP umfasst.

7. Verfahren nach Anspruch 6, umfassend, für ein Erhalten der Indikation in a), wenigstens eines der Folgenden:

- Erhalten von Indikationen von Zentralitäten von denen der Mehrzahl von Routern, welche auf wenigstens einer von wenigstens zwei möglichen Wegen für den Verkehr zwischen der wenigstens einen UE zu dem PoP liegen; und

- Empfangen, als eine Eingabe, von Indikationen von akkumulierten Abhängigkeiten von denen der Mehrzahl von Routern, welche auf wenigstens einer von wenigstens zwei möglichen Wegen für den Verkehr zwischen der wenigstens einen UE zu dem PoP liegen.

8. Verfahren nach einem der vorhergehenden Ansprüche, wobei das Erhalten der Indikation in a) an einem Knoten des Netzwerkes durchgeführt wird, welcher sich von dem Router unterscheidet, bevorzugt an einem Mobile-Edge-Computing, MEC, Server.

9. Verfahren nach Anspruch 1, ferner umfassend: nach b), eine Übertragung zu dem wenigstens einen Router des ausgewählten Weges eines Signals für ein Aktualisieren seines Router-Schemas in Abstimmung mit der Auswahl.

10. Verfahren nach einem der vorhergehenden Ansprüche, wobei das Erhalten in a) ein Empfangen der Indikation an einer Eingabe des Routers umfasst, bevorzugt in einer Form eines Signals, welches ein Router-Schema an dem Router aktualisiert, um den ausgewählten Weg zu verwenden.

11. Verfahren nach einem der vorhergehenden Ansprüche, wobei die Zentralität auf der Betweenness-Zentralität basiert, und jede der Schätzungen der Auswirkung auf die Zentralität des PoP, aufgrund eines Auswählens von einem der wenigstens zwei möglichen Wege, als eine gewichtete Summe von Änderungen von akkumulierten Abhängigkeiten von Routern auf dem Weg berechnet wird.

12. Verfahren nach einem der vorhergehenden Ansprüche, wobei jede der Schätzungen der Auswirkung auf die Zentralität des PoP, aufgrund eines Auswählens von einem der wenigstens zwei möglichen Wege, durch ein iteratives Verfahren unter Verwendung eines Brandes-Algorithmus berechnet wird.

13. Verfahren nach einem der vorhergehenden Ansprüche, wobei die Mehrzahl von Routern einen Satz von intermediären Routern umfasst, welcher Router umfasst, welche geschätzt werden, um mehr als einen Schwellenwert zu der Zentralität des VNF PoP beizutragen, und die kleinere Schätzung der Auswirkung auf die Zentralität des PoP auf Schätzungen der Änderungen akkumulierter Abhängigkeiten von wenigstens manchen Routern basiert, unter den intermediären Routern.

14. Vorrichtung, umfassend eine Verarbeitungsschaltung zum Durchführen des Verfahrens nach einem der vorhergehenden Ansprüche.

15. Computerprogramm, umfassend Anweisungen, welche, wenn das Programm durch eine Verarbeitungsschaltung ausgeführt wird, die Verarbeitungsschaltung veranlassen, das Verfahren nach einem der Ansprüche 1 bis 13 auszuführen.

**Revendications**

1. Procédé pour l'utilisation dans le routage d'un trafic entre au moins un équipement utilisateur, UE, et un point de présence, PoP, d'une fonction de réseau virtuel, VNF, placé dans un réseau comprenant une infrastructure informatique périphérique multi-accès comprenant une pluralité de routeurs, dont au moins certains sont reliés et où au moins une liaison relie la pluralité de routeurs au PoP, le procédé comprenant :

a) l'obtention d'une indication duquel parmi au moins deux chemins possibles pour le trafic entre l'au moins un UE et le PoP et passant par un routeur dans la pluralité de routeurs correspond à une estimation plus faible d'un impact sur une centralité du PoP,
b) en permettant ainsi une sélection du trajet respectif pour le routage du trafic entre l'au moins un UE et la VNF.

2. Procédé selon la revendication 1, dans lequel la centralité est basée sur au moins une parmi :

- une centralité d'intermédiarité,
- une centralité de proximité,
- une centralité de graphe, et

- une centralité de stress.

3. Procédé selon l'une quelconque des revendications précédentes, dans lequel l'estimation la plus faible de l'impact sur la centralité est basée sur au moins une parmi :

- une topologie passée,
- une topologie actuelle et
- une topologie attendue du réseau,

dans lequel la topologie est configurée pour varier en raison d'au moins un parmi : un transfert d'un UE d'un point d'accès à un autre point d'accès ; l'arrêt d'un routeur dans la pluralité de routeurs ; et la mise en marche d'un routeur dans la pluralité de routeurs.

4. Procédé selon l'une quelconque des revendications précédentes, le réseau comprenant en outre un orchestrateur VNF dynamique qui peut modifier dynamiquement un placement du PoP dans le réseau, le procédé comprenant :

- l'obtention d'un signal initiant un prochain changement du placement du PoP avec un délai qui est basé sur la sélection du trajet avec l'estimation la plus faible de l'impact sur la centralité du PoP,
- en permettant ainsi de transmettre des informations nécessaires pour exécuter VNF depuis l'ancien PoP vers le nouveau PoP.

5. Procédé selon la revendication 4, pour le réseau comprenant en outre un collecteur de statistiques de réseau adapté pour préparer des statistiques de réseau, dans lequel l'orchestrateur VNF dynamique est configuré pour récupérer les statistiques de réseau, dans lequel

- le retard est en outre basé sur les statistiques de réseau en tenant compte du trafic entre l'au moins un UE et le VNF tel qu'acheminé le long du chemin sélectionné.

6. Procédé selon l'une quelconque des revendications précédentes, dans lequel ladite obtention de l'indication comprend la génération de l'indication en comparant les estimations des impacts sur la centralité du PoP.

7. Procédé selon la revendication 6, comprenant, pour l'obtention de ladite indication en a), au moins une parmi :

- l'obtention d'indications de centralités de ceux parmi la pluralité de routeurs qui se trouvent sur au moins un d'au moins deux chemins possibles pour le trafic entre l'au moins un UE et le PoP ; et
- la réception, comme entrée, d'indications de dépendances cumulées de ceux parmi la pluralité de routeurs qui se trouvent sur au moins un d'au moins deux chemins possibles pour le trafic entre l'au moins un UE et le PoP.

8. Procédé selon l'une quelconque des revendications précédentes, dans lequel ladite obtention de l'indication en a) est réalisée au niveau d'un nœud du réseau différent du routeur, de préférence au niveau d'un serveur d'informatique périphérique mobile, MEC.

9. Procédé selon la revendication 1, comprenant en outre, après b), une transmission vers l'au moins un routeur du chemin sélectionné, un signal pour la mise à jour de son schéma de routage en fonction de la sélection.

10. Procédé selon l'une quelconque des revendications précédentes, dans lequel ladite obtention en a) comprend la réception de l'indication au niveau d'une entrée du routeur, de préférence sous la forme d'un signal de mise à jour d'un schéma de routage au niveau du routeur pour utiliser le chemin sélectionné.

11. Procédé selon l'une quelconque des revendications précédentes, dans lequel la centralité est basée sur la centralité d'intermédiarité, et chacune des estimations de l'impact sur la centralité du PoP dû à la sélection de l'un des au moins deux chemins possibles est calculée comme une somme pondérée de changements de dépendances cumulées de routeurs sur le chemin.

12. Procédé selon l'une quelconque des revendications précédentes, dans lequel chacune des estimations de l'impact sur la centralité du PoP dû à la sélection de l'une des au moins deux chemins possibles est calculée par un procédé itératif utilisant un algorithme de Brandes.

**13.** Procédé selon l'une quelconque des revendications précédentes, dans lequel la pluralité de routeurs inclut un ensemble de routeurs intermédiaires comprenant des routeurs qui sont estimés contribuer de plus d'un seuil à la centralité du PoP de VNF, et l'estimation plus faible de l'impact sur la centralité du PoP est basée sur des estimations des changements de dépendances cumulées d'au moins certains routeurs parmi lesdits routeurs intermédiaires.

**14.** Dispositif comprenant un circuit de traitement pour réaliser le procédé selon l'une quelconque des revendications précédentes.

**15.** Programme informatique comprenant des instructions qui, lorsque le programme est exécuté par un circuit de traitement, amènent le circuit de traitement à réaliser le procédé selon l'une quelconque des revendications 1 à 13.

FIG. 1

SD-WAN domain

MEC

(1) Determine the intermediary routers

(2) Monitor/predict accumulated dependencies

(3) Determine/update forwarding rules to minimize the relocation of VNF

(4) Apply the forwarding rules

VNF(v)

Gateway (S)

Internet

User terminal (W)

Path from W to S: $P_s(W)$
All routers in the path are predecessors of VNF(v)

——— Possible path through multiple routers in the SD-WAN

EP 4 109 844 B1

## FIG. 2

**FIG. 3**

VNF PoP

R1  R2  R3  R4  R5  R6

(2,3)

(1)  (2)

UE moves from 1
to 2

EP 4 109 844 B1

FIG. 4

(1) Determine the intermediary routers

(2) Monitor/predict accumulated dependencies

(3) Determine/update forwarding rules to minimize the relocation of VNF

(4) Apply the forwarding rules

MEC

AP#N

AP#3

VNF(v)

R2

AP#2

Router(s)

R1

AP#1

UE (w)

FIG. 5

```
                    ┌─────────────────────────────────────────┐
                    │ MEC receives topology information from   │
                    │ the routers (accumulated dependency,     │
                    │ number of active paths)                  │
                    └─────────────────────────────────────────┘
                                      │
                                      ▼
                    ┌─────────────────────────────────────────┐
                    │ MEC determine/estimate the centrality    │
                    │ reduction for the PoP that is induced    │
                    │ by the intermediary routers              │
                    └─────────────────────────────────────────┘
                                      │
                                      ▼
                                 ╱─────────╲
                    no          ╱ If        ╲         yes
             ◀─────────────────◀  centrality  ▶─────────────────┐
                                ╲ reduction > ╱                 │
                                 ╲ threshold?╱                  │
                                  ╲─────────╱                   │
                                                                ▼
                                            ┌───────────────────────────────────┐
                                            │ MEC determine a set of routers     │
                                            │ from intermediary routers to       │
                                            │ perform traffic steering           │
                                            └───────────────────────────────────┘
                                                          │
                                                          ▼
                                            ┌───────────────────────────────────┐
                                            │ MEC updates PDR and FAR            │
                                            │ information in the set of routers  │
                                            └───────────────────────────────────┘
                                                          │
                                                          ▼
                                            ┌───────────────────────────────────┐
                                            │ MEC triggers the traffic steering  │
                                            │ between routers in the set of      │
                                            │ routers                            │
                                            └───────────────────────────────────┘
                                                          │
                                                          ▼
```

FIG. 6

Routers exchange topology information
(accumulated dependency, number of active paths)

Routers determine/estimate the accumulated
dependency reduction of neighboring routers
and inform MEC

no    If % of acc_depen
reduction > threshold ?    yes

MEC trigger traffic steering for the set of routers
that reported high acc_depen reduction

The routers that received MEC trigger update PDR
and FAR information autonomously

Routers triggers traffic steering autonomously
based on the PDR and FAR update

acc_depen: accumulated dependency

FIG. 7

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018077023 A1

**Non-patent literature cited in the description**

- **CHEN, SHANZHI ; QIN, FEI ; HU, BO et al.** User-centric ultra-dense networks for 5G: Challenges, methodologies, and directions. *IEEE Wireless Communications*, 2016, vol. 23 (2), 78-85
- Dynamic, latency-optimal vNF placement at the network edge. **CZIVA, RICHARD ; CHRISTOS ANAGNOSTOPOULOS ; DIMITRIOS P. PEZAROS**. Ieee infocom 2018-ieee conference on computer communications. IEEE
- **BARTOK, DÁVID ET MANN ; ZOLTÁN ÁDÁM**. A branch-and-bound approach to virtual machine placement. *Proceedings of the 3rd HPI cloud symposium "operating the cloud*, 2015, 49-63
- **BRANDES, ULRIK**. A faster algorithm for betweenness centrality. *Journal of mathematical sociology*, 2001, vol. 25 (2), 163-177